# EUROPÄISCHE PATENTANMELDUNG

(11) **EP 2 915 960 A1**
(43) Veröffentlichungstag der Anmeldung: **09.09.2015**
(21) Anmeldenummer: 14158234.6
(22) Anmeldetag: 07.03.2014
(51) Int. Cl.: F01D 11/00, F16J 15/00

(54) **Dichtungsanordnung zum Abdichten eines Spalts zwischen zwei bei Raumtemperatur spaltseitig flächig aneinander liegender Bauteile**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft eine Dichtungsanordnung (11) zum Abdichten eines Spalts zwischen zwei spaltseitig flächig aneinander liegender Bauteile (13, 15), welche nur mittels einer transversalen Bewegung montierbar sind, wobei jedes Bauteil (13, 15) spaltseitig eine Stufe (26) zur Bildung eines überlappenden Anschlags aufweist und die Stufen (26) längs ihrer Kanten (27) gekrümmt sind. Um eine verbesserte Dichtungsanordnung (11) bereitzustellen, die einerseits eine weiterhin einfache Montage mittels einer transversalen Bewegung der beiden betreffenden Bauteile (13, 15) zueinander und andererseits trotz eines möglichen Auseinanderklaffens der beiden spaltseitigen Flächen (30, 32) der Bauteile (13, 15) weiterhin eine besonders zuverlässige Abdichtung des zwischen den beiden Spaltseiten (24) vorhandenen Spalts gewährleistet, ist vorgesehen, dass eines (13) der beiden Bauteile (13, 15) eine erste sich analog zur gekrümmten Kante (27) erstreckende Nut (40) aufweist, die in der zurückgesetzten Teilfläche der Spaltseite (24) des betreffenden Bauteils (13) angeordnet ist, dass das andere (15) der beiden Bauteile (13, 15) einer der Nut (40) gegenüberliegende Ausnehmung (34) aufweist und dass ein modulares Dichtelement (52) umfassend ein Dichtband (54) und ein Spiralband (56) vorgesehen ist, welches mit seinem aus der Nut (40) herausragenden ersten Dichtabschnitt (50) an einer Seitenfläche der Ausnehmung (34) anliegt.

## Beschreibung

Die Erfindung betrifft eine Dichtungsanordnung zum Abdichten eines Spalts zwischen zwei bei Raumtemperatur spaltseitig flächig aneinander liegender Bauteile, wobei jedes Bauteil spaltseitig eine Stufe zur Bildung eines überlappenden Anschlags aufweist und die Stufen längs ihrer Kanten gekrümmt sind.

Eine derartige Dichtungsanordnung ist insbesondere bei Gehäusen von thermischen Strömungsmaschinen bekannt. Thermische Strömungsmaschinen sind zumeist als stationäre Gasturbinen oder als Dampfturbinen mit einem eher vergleichsweise dickwandigen Gehäuse ausgestattet, um die im Inneren auftretenden hohen Drücke gegenüber der Umgebung abzuschirmen. Aufgrund der massiven Ausführung der Gehäuse und ihrer besonderen Größe ist es üblich, die Gehäuse mehrteilig auszugestalten und im Gießverfahren herzustellen. Die prinzipiell rohrförmigen Gehäuse sind in der Regel in einer so genannten horizontalen Teilfuge hälftig geteilt, so dass die betreffenden Gehäuse ein unteres Gehäuseteil sowie ein oberes Gehäuseteil aufweisen. Gleichzeitig weisen die Gehäuse eine derartige axiale Erstreckung auf, dass sie auch in dieser Richtung mehrteilig ausgestaltet sind: die Gehäuse sind dann an Axialfugen geteilt, die auch als vertikale Teilfugen bezeichnet werden. Die Bereiche, an denen sowohl die horizontale Teilfuge als auch die axiale Teilfuge aufeinander treffen, werden als Kreuzteilfuge bezeichnet.

Die einzelnen Gehäuseteile sind mit Flanschen ausgestattet, die an dem an jeweiligen Gehäuserand nach außen weisen und somit Raum bieten für Bohrungen, um die aneinander liegenden Flansche unmittelbar benachbarter Gehäuseteile mittels Dehnschrauben dauerhaft und zuverlässig miteinander zu verbinden.

Es hat sich jedoch herausgestellt, dass aufgrund der hohen Temperaturunterschiede zwischen Raumtemperatur und Betriebstemperatur die Gehäuseteile thermischen Dehnungen unterworfen sind, die insbesondere aufgrund der Anordnung der Flansche sowohl im zeitlichen Verhalten als auch in der Ausprägung innerhalb eines jeden Gehäuseteils lokal unterschiedlich sein können. Diese lokal unterschiedlichen Dehnungen können dazu führen, dass die Gehäuseteile an den Teilfugen geringfügig auseinander klaffen, obwohl diese durch die Vielzahl von den Dehnschrauben mit großer Kraft aneinander gepresst werden. Dies verschlechtert die Dichtigkeit der Teilfugen, so dass im schlimmsten Fall sogar geringe Leckagen nach außen auftreten können.

Gleichzeitig ist es beispielsweise aus der EP 0 852 659 B1 bekannt, in den Flanschflächen zweier aneinander liegender Gehäuseteile eine geriffelte Dichtung, um Leckagen aus dem Inneren des Gehäuses nach außen bei Auftreten von Klaffungen zu reduzieren.

Anstelle von den geriffelten Dichtungen der EP 0 852 659 B1 können auch so genannte E-Dichtungen verwendet werden, die in nur einer Nut sitzend an einer gegenüberliegenden Flanschfläche anliegen. Es hat jedoch gezeigt, dass selbst derartige Dichtungen keine ausreichende Rückspring-Kapazität aufweisen, um die tatsächlich auftretenden Spaltmaße zu schließen. Zudem sind derartige E-Dichtungen sehr teuer, aufwendig in der Montage und auch nur für den einmaligen Gebrauch bestimmt, so dass nach ihrer Verwendung und dem Öffnen eines damit ausgestatteten Gehäuses diese zu erneuern sind.

Weiterhin ist zu beachten, dass bei den eingangs genannten thermischen Strömungsmaschinen das Aufsetzen des letzten oberen Gehäuseteils auf eine untere Gehäusehälfte dieses während des Absenkens passgenau entlang einer Spaltfläche des benachbarten oberen Gehäuseteils vorbeibewegt werden muss, da eine Montagebewegung von der Seite her nicht möglich ist. In Bezug auf die vertikale Teilungsfuge besteht somit für das letzte zu montierende Gehäuseteil nicht die Möglichkeit, dieses axial, also von der Seite her, auf das andere obere Gehäuseteil hin zu bewegen. Diese montagebedingte Einschränkung lässt die Verwendung von gängigen Dichtesystemen mit den in der EP 0 852 659 B1 gezeigten, einander gegenüberliegenden Nuten und darin sitzenden Dichtungen an den betreffenden Stellen nicht zu.

Aufgabe der Erfindung ist daher die Bereitstellung einer Dichtungsanordnung zum Abdichten zweier spaltseitig flächig aneinander liegender Bauteile, die eine Montage ermöglichen, bei der eines der beiden Bauteile entlang des möglichen Leckagepfades bewegt wird.

Die der Erfindung zugrunde liegende Aufgabe wird mit einer Dichtungsanordnung gemäß dem Merkmal des Anspruchs 1 gelöst.

Bei einer erfindungsgemäßen Dichtungsanordnung zum Abdichten eines Spalts zwischen zwei bei Raumtemperatur spaltseitig flächig aneinander liegender Bauteile, wobei jedes Bauteil spaltseitig eine Stufe zur Ausbildung eines überlappenden Anschlags aufweist und die Stufen längs ihrer Kanten gekrümmt sind, ist vorgesehen, dass eines der beiden Bauteile eine erste sich analog zur gekrümmten Kante erstreckende Nut aufweist, die in der aufgrund der Stufe zurückgesetzten Teilfläche der Spaltseite des betreffenden Bauteils angeordnet ist, dass das andere der beiden Bauteile eine der Nut gegenüberliegende, dessen Stufe verkürzende Ausnehmung aufweist und dass ein Dichtelement vorgesehen ist, welches in der Nut sitzend mit einem ersten Dichtabschnitt an einer Seitenfläche der Ausnehmung anliegt.

Der Erfindung liegt die Erkenntnis zugrunde, dass bei den beiden Bauteilen der Dichtungsanordnung die Dichtflächen nicht parallel ausgerichtet sein sollen gegenüber den Spaltflächen der Bauteile, die flächig aneinander liegend den eigentlichen abzudichtenden Spalt definieren, sondern quer, insbesondere senkrecht dazu.

Insbesondere dieses Merkmal ermöglicht, dass trotz Vorhanden Sein eines Dichtelements die Spaltflächen der beiden Bauteile während ihres Zusammensetzens nicht aufeinander zu bewegt werden, was im Sinne dieser Anmeldung als Lateralbewegung der beiden Bauteile zueinander definiert wird. Anstelle dessen ist die relative Montagebewegung der beiden Bauteile parallel zu deren später aneinander liegenden Spaltflächen, was im Sinne dieser Anmeldung als Transversalbewegung der beiden Bauteile definiert wird. Insbesondere in Kombination mit den spaltseitig angeordneten, gekrümmten Stufen, deren jeweilige Auftrittflächen als Anschlagsflächen in der endgültigen Betriebslage aneinander liegen, ist es somit möglich, dass das Dichtelement mit einem ersten Dichtabschnitt erst dann an einer Seitenfläche der Ausnehmung des anderen Bauteils dichtend zum Anliegen kommt, wenn die beiden Bauteile nahezu ihre endgültige Lage zueinander erreicht haben. Dies verhindert reibender Verschleiß am Dichtelement beim Zusammensetzen der Bauteile. Da die Anlagefläche für den ersten Dichtabschnitt nicht wie bisher mit der Spaltfläche des anderen Bauteils, sondern mit der Seitenwand der Ausnehmung zusammenfällt und die Seitenwand der Ausnehmung jedoch quer zur Spaltfläche orientiert ist, kann die Erstreckungstiefe des Dichtelements in das andere Bauteile hinein prinzipiell beliebig groß gewählt werden. Zweckmäßigerweise ist diese Erstreckung jedoch nur etwas größer gewählt als das maximal erwartete Spaltmaß zwischen den beiden Spaltflächen, so dass eine bessere Dichtwirkung als bisher bei gleichzeitig größerer Verformbarkeit der Bauteile erzielt werden kann.

Weiter ist die Nut stufennah angeordnet und das Dichtelement umfasst ein Dichtband und ein das Dichtband an eine Seitenwand der Nut anpressendes Spiralband, wobei ein aus der Nut herausragender Abschnitt des Dichtbands als erster Dichtabschnitt an besagter Seitenwand der Ausnehmung vorgespannt anliegt. Zusätzlich ist die Auftrittfläche der Stufe des einen Bauteils dem Raum mit dem höheren Druck zugewandt. Hiermit wird erreicht, dass eine gegebenenfalls auftretende Leckage aus einem Raum mit dem höheren Druck in Richtung eines Raums mit niedrigerem Druck einerseits die erste Abdichtung mittels ersten Dichtabschnitt und der Seitenwand der Ausnehmung nicht umgehen kann. Andererseits liegt der in der Nut angeordnete Abschnitt des Dichtbands in einer Ecke von Nutgrund und Nutseitenwand vom Spiralband angepresst dicht an. Eine mögliche Leckageströmung mit hohem Druck erhöht ggf. den Anpressdruck des Dichtbandes an die jeweilige Anlagefläche - einerseits die Seitenwand der Nut und andererseits die Auftrittfläche der Stufe -, was die Dichtwirkung erhöht. Diese Ausgestaltung des Dichtelements ist dieses sowohl bei kleineren Bauteilkrümmungen bzw. -radien als auch bei größeren Bauteilkrümmungen bzw. -radien einfacher zu montieren, da es einerseits modular ausgestaltet ist und andererseits eine weiter vereinfachte Geometrie aufweist. Diese vereinfachte Geometrie ist insbesondere von Vorteil, wenn die Nut, in der das Dichtelement eingesetzt wird, ebenso gekrümmt ist wie die Kanten der Stufen.

Der Begriff "stufennah" ist so zu verstehen, dass der Abstand zwischen derjenigen Seitenwand der Nut, die zur Auftrittfläche der Stufe am nächsten angeordnet ist und der Auftrittfläche der Stufe kleiner als 2 cm ist. Vorzugsweise ist kein Abstand vorhanden, sodass die Auftrittfläche der Stufe und die besagte Seitenwand der Nut versatzfrei ineinander übergehen.

Zudem ist die erfindungsgemäße Dichtungsanordnung sehr einfach zu montieren, da das Dichtelement zuerst in die gekrümmte Nut einzusetzen ist, wonach dann das andere Bauteil durch die besagte Transversalbewegung an das eine Bauteil angelegt werden muss. Dabei ist es von besonderen Vorteil, dass die Montagebewegung unabhängig von der Anwesenheit des Dichtelements ist: für den Zusammensetzvorgang der beiden Bauteile ist es unerheblich, ob das Dichtelement vorhanden ist oder nicht.

Vorteilhafte Ausgestaltungen sind in den abhängigen Ansprüchen angegeben.

Vorzugsweise handelt es sich bei der Dichtungsanordnung um ein Turbinengehäuse umfassend ein erstes oberes Gehäuseteil und ein zweites oberes Gehäuseteil sowie ein unteres Gehäuseteil, wobei das erste obere Gehäuseteile als das eine der beiden Bauteile einer Dichtungsanordnung nach der voranbeschriebenen Art und das zweite obere Gehäuseteil als das andere der beiden Bauteile der Dichtungsanordnung ausgestaltet ist.

Die Begriffe "oberes" und "unteres" beziehen sich bei thermischen Strömungsmaschinen bzw. Turbinengehäuse auf die Horizontalebene. Dies ist jedoch nicht einschränkend zu verstehen, da die erfindungsgemäße Dichtungsanordnung auch bei derartigen Strömungsmaschinen eingesetzt werden kann, die beispielsweise vertikal aufgestellt sind und somit vielmehr ein linkes Gehäuseteil und rechts Gehäuseteil anstelle des unteren Gehäuseteils und des oberen Gehäuseteils aufweisen können. Gleiches gilt für die Begriffe "erstes" und "zweites" bzw. "das eines der beiden" und "das andere der beiden".

Gemäß einer weiteren vorteilhaften Ausgestaltung ist die Krümmung der Kanten der Stufen kreisbogenförmig um einen gedachten Mittelpunkt und der Mittelpunkt liegt auf einer gedachten sich in einer Axialrichtung erstreckenden Mittelachse, um welche die beiden Bauteile analog zur Kantenkrümmung gewölbt sind. Mithin können die beiden Bauteile in Form einer Rohrschale ausgestaltet sein, wobei die Rohrschale eine in Umfangsrichtung sich erstreckende Länge aufweist, die bevorzugt eine Länge von 180° aufweisen. Dann sind die Bauteile halbrohrförmig ausgestaltet, um gemeinsam mit einem anderen Paar beispielsweise ein Turbinengehäuse ausbilden zu können. Bei einer geringen Bogenlänge erhöht sich dann die Anzahl der Teilfugen.

Weiter bevorzugt ist die konkav gekrümmte Seitenwand der Nut gegenüber der konkav gekrümmten Seitenwand der Ausnehmung geringfügig versetzt, derart, dass die Spaltfläche der konkav gekrümmten Seitenwand eine Öffnung der Nut geringfügig abdeckt. Mit dieser Ausgestaltung wird ermöglicht, dass das in der Nut sitzende Dichtelement während der Transversalbewegung von der Seitenwand der Ausnehmung geringfügig über die Nutöffnung geschoben wird, so dass hierdurch eine federnde Anlage des Dichtabschnitts des Dichtelements an der betreffenden Seitenfläche der Ausnehmung hergestellt wird, was die Dichtwirkung erhöht. Der Begriff "geringfügig" ist dabei so zu verstehen, dass beispielsweise bei einer Nutöffnung mit einer Breite von ca. 1 cm ein Versatz von ca. 0,3 mm bis ca. 1 mm bereits ausreichend ist.

Die Begriffe "konvex" und "konkav" beziehen sich auf die nach außen bzw. nach innen weisenden Flächen aufgrund besagter Krümmung.

Zweckmäßigerweise weisen beide Bauteile an ihrer nach außen weisenden Seite Flansche zur wechselseitigen Befestigung mittels Flanschverschraubungen auf. Hiermit kann eine vergleichsweise einfache Befestigung der beiden Bauteile aneinander herbeigeführt werden.

Insgesamt betrifft die Erfindung somit eine Dichtungsanordnung zum Abdichten eines Spalts zwischen zwei bei Raumtemperatur spaltseitig flächig aneinander liegender Bauteile, welche auch mittels einer transversalen Bewegung montierbar sind, wobei jedes Bauteil spaltseitig eine Stufe zur Bildung eines überlappenden Anschlags aufweist und die Stufen längs ihrer Kanten gekrümmt sind. Um eine verbesserte Dichtungsanordnung bereit zu stellen, die einerseits eine weiterhin einfache Montage mittels einer transversalen Bewegung der beiden betreffenden Bauteile zueinander und andererseits trotz eines möglichen Auseinanderklaffens der beiden Spaltflächen der Bauteile weiterhin eine besonders zuverlässige Abdichtung des zwischen den beiden Spaltflächen vorhandenen Spalts gewährleistet, ist vorgesehen, dass eines der beiden Bauteile eine erste sich analog zur gekrümmten Kante erstreckende Nut aufweist, die in der aufgrund der Stufe zurückgesetzten Spaltfläche des betreffenden Bauteils angeordnet ist, dass das andere der beiden Bauteile einer der Nut gegenüberliegende Ausnehmung aufweist und dass ein modulares Dichtelement umfassend ein Dichtband und ein Spiralband vorgesehen ist, welches in der Nut sitzend mit einem ersten Dichtabschnitt an einer Seitenfläche der Ausnehmung anliegt.

Weitere Vorteile und Merkmale der Erfindung werden anhand weiterer Ausführungsbeispiele näher angegeben. Es zeigen:
- Figur 1: ein Gasturbinengehäuse in einer Seitenansicht mit zwei spaltseitig flächig aneinander liegenden Gehäuseteilen,
- Figur 2: einen Querschnitt durch das Gehäuse aus Figur 1 als Seitenansicht eines ersten Bauteils einer erfindungsgemäßen Dichtungsanordnung,
- Figur 3: das Detail X aus Figur 1 mit dem ersten Gehäuseteil und dem zweiten Gehäuseteil kurz vor Vollendung der Positionierung des zweiten Gehäuseteils gegenüber dem ersten Gehäuseteil und mit einem Dichtelement,
- Figur 4: das Detail X aus Figur 1 mit der endgültigen Positionierung der beiden Bauteile zueinander und mit einem Dichtelement,
- Figuren 5: das Dichtelement in einer perspektivischen Darstellung.

In allen Figuren sind identische Merkmale mit den gleichen Bezugszeichen versehen.

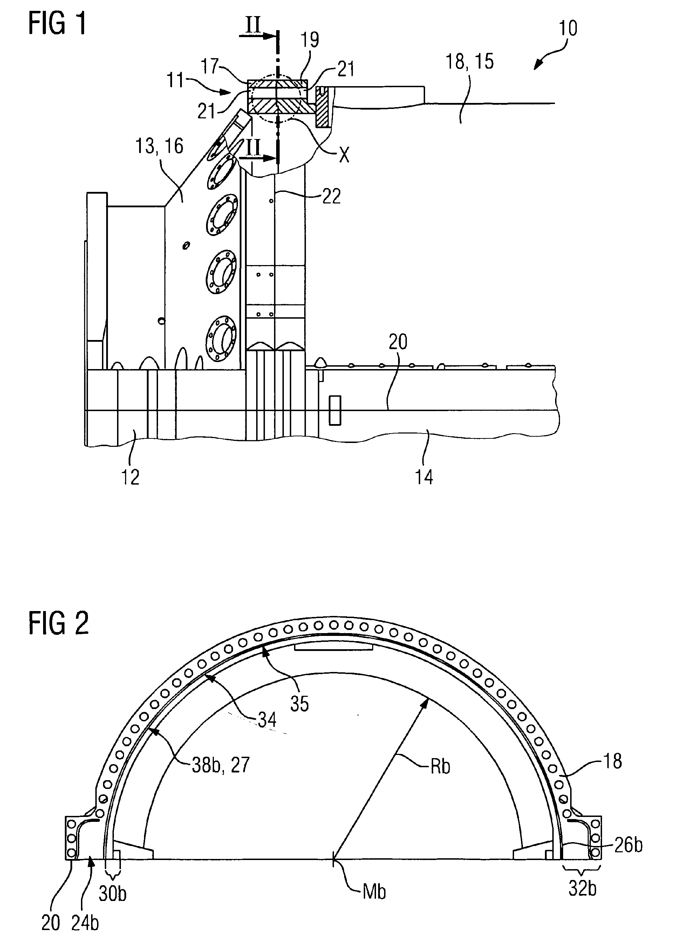

Die Figur 1 zeigt in einer Seitenansicht einen Ausschnitt auf das Gehäuse 10 einer stationären Gasturbine. Das Gehäuse 10 umfasst im dargestellten Ausführungsbeispiel ein erstes unteres Gehäuseteil 12, ein zweites unteres Gehäuseteil 14, ein erstes oberes Gehäuseteil 16 und ein zweites oberes Gehäuseteil 18. Jedes der Gehäuseteile 12, 14, 16, 18 ist halbrohrförmig ausgestaltet, so dass zwischen den beiden unteren Gehäuseteile 12, 14 und den beiden oberen Gehäuseteilen 16, 18 sich eine horizontale Teilfuge 20 ausbildet. In der horizontalen Teilfuge 20 liegen bei Raumtemperatur die jeweiligen Gehäuseteile mit ihren Spaltflächen flächig aneinander. Oberhalb der horizontalen Teilfuge 20 liegen das erste obere Gehäuseteil 16 und das zweite oberer Gehäuseteil 18 in einer vertikalen Teilfuge 22 spaltseitig aneinander. Im gezeigten Ausführungsbeispiel erstreckt sich die vertikale Teilfuge 22 nach unten über die horizontale Teilfuge 20 hinaus, so dass das erste untere Gehäuseteil 12 und das zweite untere Gehäuseteil 14 spaltseitig flächig aneinander liegen. Im Sinne dieser Anmeldung sind diejenigen Flächen der Gehäuseteile 12, 14, 16, 18, die den jeweils gegenüberliegenden Bauteilen zugewandt sind, spaltseitig an dem betreffenden Bauteil angeordnet.

Die Gehäuseteile 16, 18 weisen im Bereich der vertikalen Teilfuge angeordnete Flansche 17, 19 auf, in denen Bohrungen 21 angeordnet sind. In diesen Bohrungen 21 sitzen nicht dargestellte Dehnschrauben, die die beiden Gehäuseteile 16, 18 spaltseitig fest aneinander pressen.

Die Erfindung wird nachfolgend anhand der beiden oberen Gehäuseteile 16, 18 näher erläutert, wobei das erste obere Gehäuseteil 16 das eine (13) der beiden Bauteile 13, 15 einer erfindungsgemäßen Dichtungsanordnung 11 darstellt und das zweite obere Gehäuseteil 18 das andere (15) der beiden Bauteile 13, 15 einer erfindungsgemäßen Dichtungsanordnung.

Da beide oberen Gehäuseteile 16, 18 zum Teil identischen Merkmale aufweisen, erhalten die Bezugszeichen dieser Merkmale in der nachfolgenden Figurenbeschreibung die Suffixe "a" bzw. "b". Den betreffenden Bezugszeichen wird das Suffix "a" zur Kennzeichnung besagter Merkmale des ersten oberen Gehäuseteils 16 hinzugefügt und das Suffix "b" zur Kennzeichnung der Merkmale des zweiten oberen Gehäuseteils 18. Werden die betreffenden Bezugszeichen ohne Suffix verwendet, so sind darunter die Merkmale beider Gehäuseteile 16, 18 verstanden.

Figur 2 zeigt den Schnitt entlang der Schnittlinie II-II aus Figur 1, wobei die Schnittlinie mit der vertikalen Teilfuge 22 zusammenfällt, so dass Figur 2 gleichzeitig eine Seitenansicht des zweiten oberen Gehäuseteils 18 darstellt. Das zweite obere Gehäuseteil 16 erstreckt sich um einen gedachten Mittelpunkt Mb mit konstantem Radius Rb über eine Bogenlänge von 180°. In einer dem Betrachter der Figur 2 zugewandten Spaltseite 24b des zweiten oberen Gehäuseteils 18 ist eine Stufe 26b angeordnet. Die Stufe 26b ist dergestalt, dass der in Bezug zur Stufe 26b radial weiter innen liegende Teil 30b der Spaltfläche zurückgesetzt ist gegenüber des radial außerhalb liegenden Teils 32b der Spaltfläche. Eine Auftrittfläche 38b der Stufe 26b weist somit zum Mittelpunkt Mb.

Gleichzeitig ist die Stufe 26b durch eine Ausnehmung 34 verkürzt, so dass sich eine zweite Stufe 35 ausbildet.

Mithin weist die Stufe 26b eine Kante 27b auf, die längs ihrer Erstreckung gekrümmt ist, ebenso wie das Gehäuseteil 18 selber. Die Kante 27b an sich kann auch abgerundet sein.

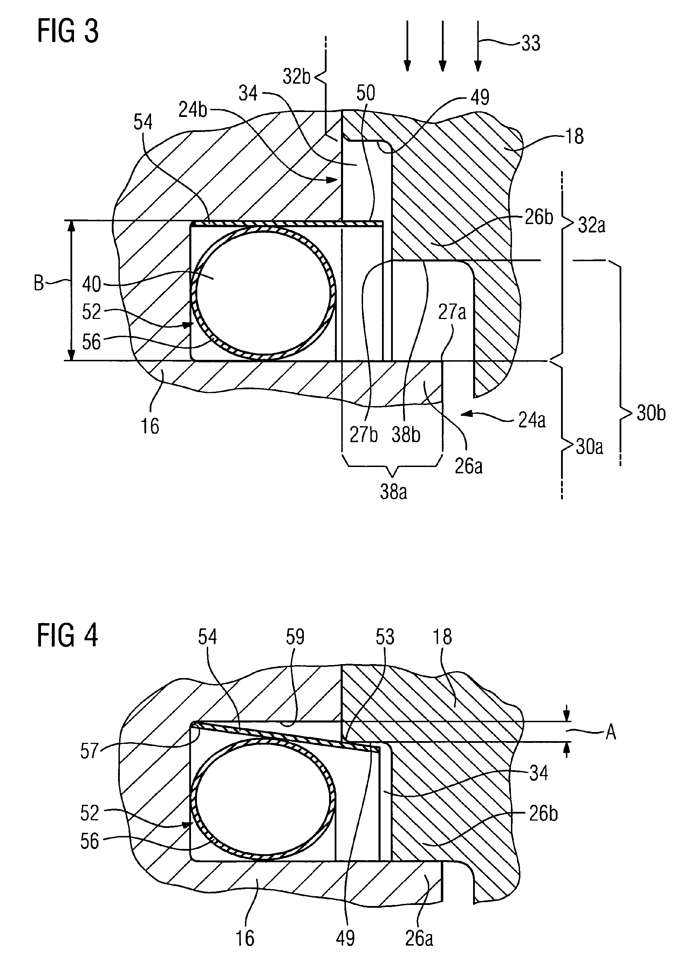

Figur 3 zeigt einen Querschnitt durch das Detail X aus Figur 1. Das erste obere Gehäuseteil 16 ist in Figur 3 links in seiner endgültigen Betriebslage dargestellt, wohingegen das zweite obere Gehäuseteil 18 noch in einer Montageposition dargestellt ist, kurz bevor es seine endgültige Betriebsposition erreicht. Die Pfeile 33 stellen die Bewegungsrichtung des zweiten oberen Gehäuseteils 18 gegenüber dem ersten oberen Gehäuseteil 16 dar, welche transversal zu der Ebene der Spaltfläche ist. Das zweite obere Gehäuseteil 18 umfasst besagte Spaltseite 24b sowie die Stufe 26b, wobei aufgrund der Stufe 26b und der Ausnehmung 34 die Spaltseite 24b in die radial weiter innen liegende Teilfläche 30b und in die radial weiter außen liegende Teilfläche 32b unterteilt ist.

Das erste obere Gehäuseteil 16 umfasst ebenfalls eine Spaltseite 24a und eine Stufe 26a, welche die Spaltseite 24a in eine radial äußere Teilfläche 32a sowie in eine radial innere Teilfläche 32a unterteilt. Beim ersten oberen Gehäuseteil 16 ist jedoch die radial äußere Teilfläche 32a gegenüber der radial inneren Teilfläche 30a zurückversetzt.

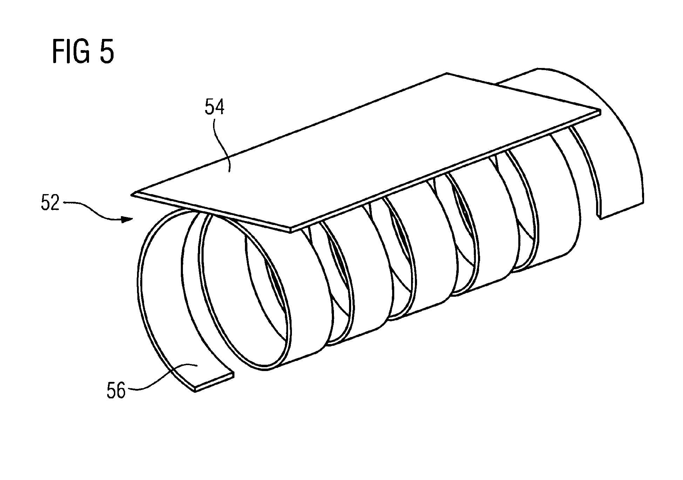

Jede Stufe 26 weist eine Auftrittfläche 38 auf. Weiter ist in der Seitenfläche 24a des ersten oberen Gehäuseteils 16 eine Nut 40 vorgesehen, welche ebenso wie die Kante 27a der Stufe 26 kreisbogenförmig gekrümmt ist. Die Nut 40 ist vorzugsweise stufennah angesiedelt: Im Ausführungsbeispiel gemäß Figur 3 ist die konvexe Seitenwand der Nut 40 auf gleichem Radius wie die konvexe Antrittsfläche 38a der Stufe 26a. In der Nut 40 sitzt ein modulares Dichtelement 52. Das modulare Dichtelement umfasst im Wesentlichen ein Dichtband 54 sowie ein Spiralband 56, so wie es aus Figur 5 perspektivisch hervorgeht. Prinzipiell ist das Spiralband 56 nicht spiralförmig im eigentlichen Sinn, sondern es ist vielmehr Helix-förmig aufgewickelt. Jedoch hat sich der Begriff "Spiralband" für derartige Bänder eingebürgert. Das in der Nut 40 sitzende Spiralband 56 stützt sich an der einen Seitenwand der Nut 40 ab, um das Dichtband 54 an der anderen Seitenwand der Nut 40 anzupressen. Dabei entspricht der Durchmesser des Helix-förmigen Dichtbandes 54 im Wesentlichen der Nutbreite B der Nut 40, oder geringfügig mehr. Das Dichtband 54 ragt mit einem ersten Dichtabschnitt 50 aus der Nut 40 heraus.

Figur 4 zeigt das erste obere Gehäuseteil 16 sowie das zweite obere Gehäuseteil 18 in ihrer endgültigen Betriebslage. Dabei liegen die Stufen 26 als Anschlag flächig aneinander, ebenso wie die radial äußeren Teilflächen 30. Die Ausnehmung 34 ist so dimensioniert, dass ein geringer Versatz A zwischen der konkaven Seitenwand der Nut 40 und der konkaven Seitenwand 49 der Ausnehmung 34 existiert. Dies führt dazu, dass das Dichtband 42 im verbauten Zustand mit seinem ersten Dichtabschnitt 50 an der Seitenwand 49 bzw. an dessen Kante 53 mit Vorspannung anliegt. Weiter presst das Spiralband 56 die andere Längskante 57 des Dichtbands 54 in konkav gekrümmte Seitenwand 59 der Nut 40 den Spalt abdichtend an. Für den Fall, dass aufgrund thermischer Dehnungen die radial außerhalb der Stufe 26 liegenden Teilflächen 30 der oberen Gehäuseteile 16, 18 auseinanderklaffen und damit einen Strömungsweg für eine Leckage öffnen würden, verschiebt sich die Dichtline der Kante 53 entlang des ersten Dichtabschnitts 50, wodurch weiterhin eine dichte Anordnung zweiter Bauteile bereitgestellt.

Das Dichtelement 52 besitzt den Vorteil, dass dieses wesentlich einfacher herzustellen und zu montieren ist, insbesondere unter Berücksichtigung, dass die Nut 40, in der das Dichtelement 52 eingesetzt ist, kreisbogenförmig ist und dementsprechend auch die Dichtelemente 52 trotz ihrer vergleichsweise einfachen geometrischen Querschnittskontur diese entlang der Längserstreckung ebenfalls gekrümmt sein müssen.

Aus Gründen der Symmetrie bietet es sich an, dass die erfindungsgemäße Dichtungsanordnung 11 nicht nur in der oberen Hälfte des Gehäuses 10 der Gasturbine angewendet wird, sondern auch bei den unteren Gehäuseteilen 12, 14. Nichtsdestotrotz besteht aber auch die Möglichkeit, dass die unteren Gehäuseteile 12, 14 nicht modular ausgestaltet sind, sondern einstückig.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere lassen sich die Merkmale unterschiedlicher Ausführungsbeispiele miteinander kombinieren.

## Patentansprüche

1. Dichtungsanordnung (11) zum Abdichtung eines Spalts zwischen zwei bei Raumtemperatur spaltseitig flächig aneinander liegender Bauteile (13, 15),
wobei jedes Bauteil (13, 15) spaltseitig eine Stufe (26) zur Bildung eines überlappenden Anschlags aufweist und die Stufen (26) längs ihrer Kanten (27) gekrümmt sind,
**dadurch gekennzeichnet,**
**dass** eines (13) der beiden Bauteile (13, 15) eine erste sich analog zur gekrümmten Kante (27) erstreckende Nut (40) aufweist, die in der zurückgesetzten Spaltfläche (30a) des betreffenden Bauteils (13) angeordnet ist,
**dass** das andere (15) der beiden Bauteile (13, 15) einer der Nut (40) gegenüberliegenden Ausnehmung (34) aufweist,
**dass** ein Dichtelement (42, 52) vorgesehen ist, welches in der Nut (40) sitzend mit einem ersten Dichtabschnitt (50) an einer Seitenfläche der Ausnehmung (34) anliegt und
**dass** das Dichtelement (52) ein Dichtband (54) und ein das Dichtband (54) an eine Seitenwand der Nut (40) anpressende Spiralband (56) und umfasst, wobei ein aus der Nut (40) herausragender Abschnitt des Dichtbands (54) als der erster Dichtabschnitt (50) an besagter Seitenwand (49) der Ausnehmung (34) anliegt.

2. Dichtungsanordnung (11) nach Anspruch 1,
bei der die Krümmung der Kanten (27) kreisbogenförmig um einen gedachten Mittelpunkt (M) ist und wobei der Mittelpunkt (M) auf einer gedachten sich in einer Axialrichtung erstreckenden Mittelachse liegt, um welche die beiden Bauteile (13, 15) analog zur Kantenkrümmung gewölbt sind.

3. Dichtungsanordnung (11) nach Anspruch 2,
bei der die beiden Bauteile (13, 15) sich in Umfangsrichtung des Kreisbogens über eine Länge von 180° erstrecken.

4. Dichtungsanordnung (11) nach Anspruch 1, 2 oder 3,
bei der eine konkav gekrümmte Seitenwand der Nut (40) gegenüber einer konkav gekrümmten Seitenwand (49) der Ausnehmung (34) geringfügig versetzt ist, derart, dass die Spaltseite (24) der konkav gekrümmten Seitenwand eine Öffnung der Nut (40) geringfügig abdeckt.

5. Dichtungsanordnung (11) nach einem der Ansprüche 1 bis 4,
bei der beide Bauteile 13, (15) Flansche aufweisen zur wechselseitigen Befestigung mittels Flanschverschraubungen.

6. Turbinengehäuse (10) umfassend ein erstes, oberes Gehäuseteil (16) und ein zweites, oberes Gehäuseteil (18) sowie ein unteres Gehäuseteil,
mit einer Dichtungsanordnung (11) nach einem der vorangehenden Ansprüche, wobei die beiden oberen Gehäuseteile (16, 18) jeweils als eines der beiden Bauteile (13, 15) der Dichtungsanordnung (11) ausgestaltet sind.

7. Turbinengehäuse (10) nach Anspruch 6,
bei der das untere Gehäuseteil ein erstes Gehäuseteil (12) und ein zweites Gehäuseteil (14) umfasst, wobei diese gemäß der beiden Bauteile (13, 15) der Dichtungsanordnung (11) nach einem der Ansprüche 1 bis 5 ausgestaltet sind.
